# EUROPÄISCHE PATENTSCHRIFT

(11) **EP 0 863 080 B1**
(45) Veröffentlichungstag und Bekanntmachung des Hinweises auf die Patenterteilung: **08.12.1999**
(21) Anmeldenummer: 98103552.0
(22) Anmeldetag: 28.02.1998
(51) Int. Cl.: B65B 51/30

(54) **Schlauchbeutelmaschine mit zumindest zwei Quersiegelbacken**
Bag forming, filling and sealing machine with at least two transversal sealing devices
Machine de fabrication, de remplissage et de scellement de sacs avec au moins deux dispositifs de scellement transversaux

(30) Priorität: 04.03.1997 DE 29703924 U
(43) Veröffentlichungstag der Anmeldung: 09.09.1998
(73) Patentinhaber: HASSIA-REDATRON GmbH, 35625 Hüttenberg-Rechtenbach (DE)
(72) Erfinder: Kauss, Wolfgang, 35305 Grünberg-Seenbrücke (DE); Schaller, Reinmar, 35581 Wetzlar-Münchholzhausen (DE); Fangmeier, Reinhard, 35576 Wetzlar (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 560 988
- EP-A- 0 736 456

## Beschreibung

Die Erfindung betrifft eine Schlauchbeutelmaschine mit zumindest zwei Quersiegelbacken, welche an gegenüberliegenden Seiten eines zu versiegelnden Folienschlauches an jeweils einem Backenträger, der zyklisch zumindest annähernd auf kreisförmigen Bahnen umläuft, angeordnet und gegeneinander anlegbar und voneinnander trennbar sind, wobei die Backenträger jeweils drehbar an zumindest einem Lenker gelagert und dieser fest mit einer drehbaren, in einer Lagerwandung gelagerten Achse verbunden ist.

Schlauchbeutelmaschinen zur Herstellung, Verfüllung und Vrschweißung von Schlauchbeuteln sind sowohl als kontinuierlich als auch als getaktet arbeitende Maschinen bekannt. Bei den kontinuierlich arbeitenden Schlauchbeutelmaschinen erfolgt der Schlauchtransport kontinuierlich ohne Stillstand und die Beutelverschweißung geschieht bei bewegtem Folienschlauch. Bei den getaktet arbeitenden Schlauchbeutelmaschinen hingegen erfolgt die Beutelquerverschweißung bei stehendem Folienschlauch. Die Beutellängsverschweißung kann bei stehendem oder bei bewegtem Folienschlauch erfolgen.

Die Beutelquerverschweißung geschieht mittels Quersiegelbacken, wobei bei den Schlauchbeutelmaschinen mit getakteter Arbeitsweise lediglich senkrecht zum Folienschlauch eine Bewegung der Quersiegelbacken aufeinander zu und voneinander weg erfolgt. Bei vertikalen Schlauchbeutelmaschinen mit kontinuierlicher Arbeitsweise werden die Quersiegelbacken entlang vorgegebener Bahnen von einem tieferliegenden Schweißort zu einem höherliegenden Schweißort an den Folienschlauch bewegt, um sich dann mit dem Folienschlauch nach unten zu bewegen und dabei den Verschweißvorgang auszuführen.

Um die Quersiegelbacken nun auf dieser Bahnkurve zu halten, ist aus der EP-B1 0 368 095 eine Schlauchbeutelmaschine bekannt, bei der die Quersiegelbacken jeweils umlaufend an einer geschlossenen, im wesentlichen kreisförmigen und an der dem Folienschlauch zugewandten Seite geradlinig ausgebildeten Kurvenbahn geführt sind. Auf diese Weise wird der Folienschlauch im Bereich der geradlinig verlaufenden Kurvenbahn durch die so parallel ausgerichteten Klemmflächen der Quersiegelbacken erfaßt und nach unten geführt, wobei die Klemmflächen durch die Kurvenbahn während der gesamten Siegelzeit parallel zueinander gehalten werden. Da der Folienschlauch so auf einer möglichst langen geraden Wegstrecke zwischen den Quersiegelbacken geklemmt ist, wird so auch eine sichere Siegelung schwierig zu verarbeitender Materialien möglich. Nachteilig hierbei ist jedoch, daß die Quersiegelbacke beim Übergang zwischen kreisförmiger und gerader Kurvenform derart gegenüber dem Folienschlauch abgewinkelt ist, daß die Querschiegelbacken zunächst nur mit ihren Kanten an der Folie zur Anlage kommen, so daß die Gefahr der Überhitzung des Folienschlauches in diesem Bereich äußerst hoch ist.

Aus diesem Grunde wurden Schlauchbeutelmaschinen vorgesehen, bei denen die Quersiegelbacken während der gesamten Umlaufbewegung nur parallel zu sicher selber verlagert werden, so daß ihre Schweißflächen stets dem Folienschlauch zugewandt sind. Eine derartige gattungsgemäße Schlauchbeutelmaschine ist aus der DE-PS 27 51 928 bekannt. Die Querschweißsiegelbacken sind dabei auf kontinuierlich umlaufenden Rädern abfedernd gelagert, wobei jedes Rad drei parallele Scheiben aufweist und die Backenhalter zwischen zwei gleichachsig angeordneten Scheiben mit fluchtenden Lagerstellen gelagert sind, während die dritte Scheibe mit versetzter Achse benachbart der einen der beiden Scheiben angeordnet ist und die versetzte Lagerstelle der Backenhalter bildet. Mittels dieser zwei gegeneinander versetzten Lagerstellen führen die Quersiegelbacken eine rein translatorische Bewegung aus und werden in dieser Bewegung gehalten, so daß sie immer parallel zu sich selbst und insbesondere in horizontaler Stellung ausgerichtet sind. Es finden also keine relativen Schwenkbewegungen der Siegelelemente und ihrer Träger statt, so daß die Quersiegelbacken von Anfang an mit ihrer gesamten Heizfläche am Folienschlauch anliegen und es keine Verbrennungen des Folienschlauchmaterials gibt. Um die Drehbewegung auf den an der anderen Seite des Folienschlauches gegenüberliegenden Mechanismus aus Rädern und Quersiegelbacken zu übertragen, kämmen die die Lagerstellen für den Backenhalter bildenden Scheiben mit den Scheiben des gegenüberliegenden Mechanismus. Durch eine elastische Gleitlagerung der Siegelteile der Quersiegelbacken mittels einer Druckfeder wird der erforderliche Siegeldruck auf den zu versiegelnden Folienschlauch aufgebracht.

Nachteilig bei dieser an sich zufriedenstellend arbeitenden Schlauchbeutelmaschine ist zum einen der komplizierte Aufbau zur Sicherstellung der Parallelhaltung der Quersiegelbacken sowie zur Übertragung der Drehbewegung auf die einander gegenüberliegenden Siegelmechanismen. Dadurch, daß beispielsweise mehrere Scheiben aufeinander zur Übertragung der Drehbewegung kämmen, ist keine einfache Veränderung der Drehachsen beider Siegelmechanismen zueinander möglich. Gleiches gilt für den Austausch der aufeinander kämmenden Scheiben bei Beschädigung, insbesondere da innerhalb dieser Scheiben die Lagerstellen für die Backenhalter und damit die Quersiegelbacken angeordnet sind. Auch der Anpreßdruck kann bei unterschiedlichen Materialien für den Folienschlauch nicht einfach eingestellt werden, da die Siegeleinrichtung mittels der Feder auf einem Kolben abgestützt ist, der in dem Backenhalter geführt und mit einer Rolle ausgerüstet ist, die mit einem im Bereich der vertikalen Arbeitsstrecke angeordneten feststehenden Nocken in Eingriff kommt, der den Kolben und damit die Siegeleinrichtung in horizontaler Richtung stationär hält, woraus sich ein konstanter Druck des Siegelteils der Quersiegelbacke ergeben soll. Bei anderen Bahnmaterialien ist es dann notwendig, die Nocken und/oder zumindest die Feder auszutauschen, um den Siegeldruck entsprechend anpassen zu können.

Der Erfindung liegt daher die Aufgabe zugrunde, eine Schlauchbeutelmaschine der eingangs genannten Art dahingehend zu verbessern, daß bei vereinfachtem Aufbau und betriebssicherer Arbeitsweise das Parallelhalten der Heizflächen der Quersiegelbacken zueinander über die gesamte Umlaufbahn gewährleistet ist und diese im Bereich der Arbeitsstrecke exakt geführt sind.

Erfindungsgemäß wird die genannte Aufgabe durch eine Schlauchbeutelmaschine der eingangs genannten Art gelöst, die durch ein erstes, fest an der Lagerwandung angeordnetes, von der drehbaren Achse durchgriffenes Zahnriemenrad und ein zweites, fest am Backenträger angeordnetes Zahnriemenrad, welche über einen endlosen, geschlossenen Zahnriemen miteinander in Drehverbindung stehen, gekennzeichnet ist. Bei dem ersten Rad handelt es sich also um ein Festrad und bei dem zweiten Rad um ein sogenanntes Planetenrad, welches außer um die eigene Achse auch noch um die das erste Festrad durchgreifende Achse drehbar ist. Die Drehung um die eigene Achse wird dabei durch den endlosen, geschlossenen Zahnriemen bewirkt. Es hat sich nämlich überraschend herausgestellt, daß eine derartige Riemenübertragung zur Parallelausrichtung der Siegelbacken im Raum zueinander ausreicht. Die Siegelbacken werden auf den Kreisbahnen, welche die Backenträger durchlaufen, immer parallel zu sich selber verlagert, so daß ihre Schweißflächen bzw. Heizflächen stets dem Folienschlauch zugewandt sind. Aufgrund dieser Parallelbewegung der Quersiegelbacken legen sich diese an der Arbeitsstrecke vorteilhaft an dem Folienschlauch an. Sie liegen dabei von Anfang an mit ihrer gesamten Heizfläche an, so daß dadurch, daß kein Verkippen oder Verkanten auftritt, auch keine Verbrennung des verwendeten Materials erfolgen kann. Das Parallelhalten der Siegelbacken im Raum wird dabei aufgrund der erfindungsgemäßen Riemenübertragung dadurch bewirkt, daß das Planetenrad eine der Drehbewegung der Backenträger entgegengesetzte Drehbewegung vollführt.

Des weiteren sind aufgrund der erfindungsgemäßen Ausgestaltung keine komplizierten Lagerstellen mehr für Kurbelarme bzw. Lenker des Backenträgers vorzusehen, da die Ausrichtung lediglich über die beiden Zahnriemenräder sowie den Zahnriemen erfolgt. Diese Bauteile sind auch bei Beschädigung oder Abnutzung einfach austauschbar. Auch ist eine derartige Riemenübertragung einfacher zu realisieren und leiser als die bisher verwendeten Führungen.

Für eine raumsparende Anordnung der Zahnriemenräder ist vorgesehen, daß diese fluchtend zueinander zwischen Lagerwandung und Lenker angeordnet sind. Der Lenker wird dann also vom Backenträger durchgriffen, wobei der Lenker auf bekannte Weise an der Drehachse für diese Siegeleinrichtung bzw. diesen Siegelmechanismus festgelegt ist. Es ist also nur noch ein Lenker an der Seite der Quersiegelbacke vorhanden und nicht zwei Lenker wie beim Stand der Technik, von denen einer zweifach gelagert werden muß. Entsprechend ist aufgrund der erfindungsgemäßen Ausgestaltung auch dafür gesorgt, daß die Übertragung leiser und einfacher als beim Stand der Technik erfolgt. Des weiteren ist hier eine elastische Riemenübertragung und keine durch starre Lenker gegebene Übertragung komplizierter Ausführung gegeben.

In Weiterbildung ist vorgesehen, daß die Zahnriemenräder gleichen Durchmesser aufweisen und beidseitig des zugehörigen Backenträgers angeordnet sind, um so für eine zuverlässige Riemenübertragung zu sorgen.

Damit die drehbaren Achsen der beiden einander gegenüberliegenden Siegeleinrichtungen und damit letztendlich auch die Riemenübertragung durch Festrad und Planetenrad derart erfolgt, daß die beiden Quersiegelbacken stets eine gegenläufige Bewegung ausführen, deren Bewegungsstrecke, momentane Geschwindigkeit und momentane Beschleunigung jeweils den gleichen Betrag haben, ist in bevorzugter Ausgestaltung vorgesehen, daß die drehbaren Achsen der an den gegenüberliegenden Seiten des zu versiegelnden Folienschlauches gegenläufig zueinander umlaufenden Backenträger über einen gemeinsamen endlosen Antriebsriemen angetrieben sind. Es erfolgt also keine aufwendige Übertragung mehr mittels mehrerer Zahnräder wie beim Stand der Technik, so daß auch dieser Antrieb einfach ausgetauscht werden kann und im übrigen leiser ist also die bekannte Übertragung durch Zahnräder.

Um diesen gemeinsamen Antrieb der Drehachsen der beiden zusammenwirkenden Siegeleinrichtungen mittels des gemeinsamen Antriebsriemens einfach ausführen zu können, handelt es sich bei diesem vorzugsweise um einen endlosen, geschlossenen Doppelzahnriemen. In Weiterbildung ist vorgesehen, daß der gemeinsame Antriebsriemen jeweils an jedem Achsenende der symmetrisch zum Siegelbereich angeordneten Drehachsen angeordnet ist, wobei die beiden Antriebsriemen zur Synchronisation der Drehbewegung über einen gemeinsamen Antriebsmotor angetrieben sind. Die stirnverzahnte Innen- und Außenseite des Antriebsriemens ist dabei zur einfachen Ausgestaltung dieser Übertragung mittels Doppelzahnriemen über mit den Achsen drehverbundene Zahnriemenräder sowie Spann- und Umlenkrollen geführt. Aufgrund dieser Ausgestaltung ist es möglich, den Achsabstand der beiden Drehachsen der Siegeleinrichtungen auf einfache Weise zu verändern, was bei der bisherigen Übertragung mittels Zahnrädern nicht der Fall ist. Entsprechend kann hier die Siegelung auch anderer, beispielsweise schwer zu verarbeitender Materialien auf einfache Weise erfolgen, da durch Veränderung des Achsabstandes die gerade Arbeitsstrecke zwischen den Quersiegelbacken veränderbar ist.

Während die bekannten Quersiegelbacken eine mechanisch nachgiebige Lagerung mittels Federn am Backenträger aufweisen, ist bei der erfindungsgemäßen Vorrichtung bevorzugt vorgesehen, daß der radiale Abstand der Quersiegelbacken zu ihrem Backenträger in Richtung des Siegelbereiches mittels eines pneumatischen Zylinders verändert wird, wodurch die Quersiegelbacken radial vorgefahren bzw. verlagert werden. Auf diese Weise ist es beispielsweise möglich, die Drehachsen der Siegeleinrichtungen derart zu beabstanden, daß die Anlage der Heizflächen der Quersiegelbacken während der geraden Arbeitsstrecke erst durch das Vorfahren mittels des pneumatischen Zylinders möglich ist. Die Quersiegelbacken werden also abweichend von der Grund-Kreisbewegung der Backenträger und damit der Quersiegelbacken nach vorne bewegt, so daß durch die pneumatischen Zylinder eine definierte Siegelung auf der Arbeitsstrecke erfolgen kann. Des weiteren wird durch das plötzliche Vorstoßen der Quersiegelbacken mittels der pneumatischen Zylinder ein Zusammendrücken des zu versiegelnden Folienschlauches bewirkt, so daß keine Vorspanner mehr notwendig sind. Aufgrund dieser starken radialen bzw. bei vertikaler Arbeitsstrecke horizontalen Komponente verkleben die Folienschläuche nicht so schnell, da eine bereits vorhergehende Berührung von Quersiegelbacke und Folienschlauch vermieden wird. Die Siegelung wird aufgrund der Verkürzung der Zeit, in der Quersiegelbacken und Schlauch einander berühren, sauberer. Auch kann dadurch, daß die Quersiegelbacken nun mittels des pneumatischen Zylinders vorgefahren werden, eine Anpassung an unterschiedliche Folienmaterialien einfach erreicht werden. Vorzugsweise beträgt der Vorschub der Quersiegelbacken gegenüber dem Backenträger etwa 10 mm. Der Druck im pneumatischen Zylinder zur Erzeugung einer konstanten Andruckkraft ist dabei in Weiterbildung während des Versiegelns geregelt veränderbar. Es wird also während des Versiegelns die Andruckkraft konstant geregelt, indem der Druck im pneumatischen Zylinder verändert wird. Hierdurch ist eine aktive Verlagerung der Quersiegelbacke gegenüber ihrem Backenträger möglich, wobei die Anlage der Heizflächen der Quersiegelbacken aneinander optimal bewirkt wird. Der Backendruck kann über die gesamte Siegelstrecke einfach konstant gehalten werden.

Weitere Vorteile und Merkmale der Erfindung ergeben sich aus den Ansprüchen sowie der nachfolgenden Beschreibung, in der ein Ausführungsbeispiel unter Bezugnahme auf die Zeichnungen im einzelnen erläutert ist. Dabei zeigt:
- Fig. 1: eine Draufsicht auf den Quersiegelbackenstuhl einer erfindungsgemäßen Schlauchbeutelmaschine;
- Fig. 2: eine Seitenansicht des Quersiegelbackenstuhls aus Fig. 1 mit dem Quersiegelbackenantrieb;
- Fig. 3: eine Seitenansicht der beiden Backenträger-Kurbeln der einander gegenüberliegenden Siegeleinrichtungen;
- Fig. 4: schematisch die Umlaufbewegung des Backenträgers;
- Fig. 5: den Quersiegelbacken-Umlauf;
- Fig. 6: die während eines Umlaufes durchlaufene Bahn der Siegeleinrichtungen;
- Fig. 7: eine vergrößerte Teilansicht der Quersiegelbackenträger-Kurbel aus Fig. 1;
- Fig. 8: eine schematische Darstellung zweier Quersiegelbacken sowie der von ihnen durchlaufenen Bewegungsbahn; und
- Fig. 9: eine schematische Darstellung der von Backenträger und Quersiegelbacke durchlaufenen Kurvenbahnen.

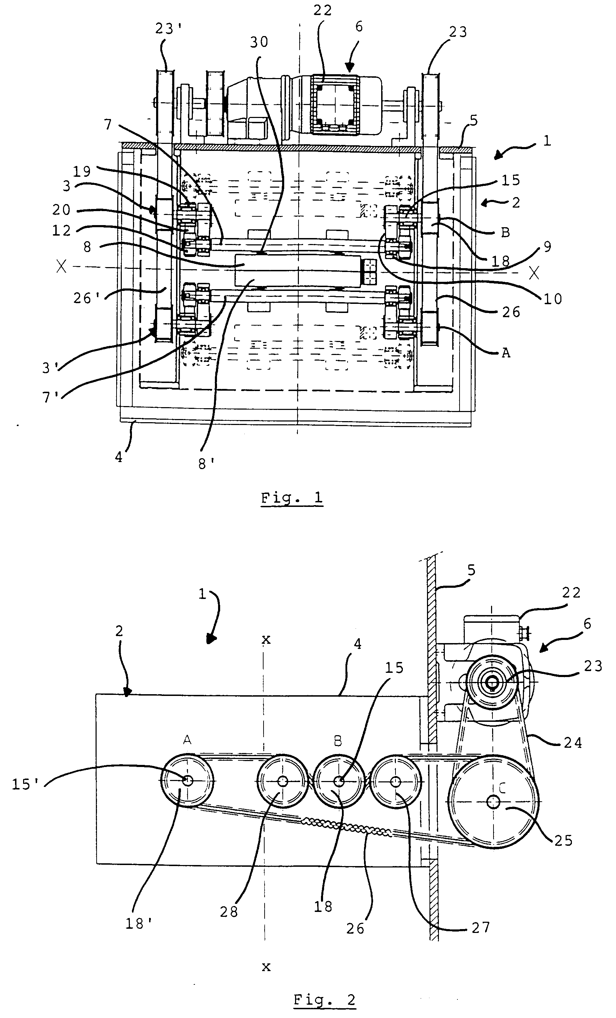

Gemäß Fig. 1 weist die erfindungsgemäße Schlauchbeutelmaschine 1 einen Backenstuhl mit zwei gegenläufigen Siegeleinrichtungen 3, 3' auf. Der mittig zwischen den beiden Siegeleinrichtungen 3, 3' ausgebildete Arbeits- bzw. Siegelbereich 29 ist im dargestellten Ausführungsbeispiel durch die Linie X-X gekennzeichnet. Die Siegeleinrichtungen 3, 3' sind innerhalb eines Schutzkastens 4 angeordnet, dessen eine Seite durch eine Frontplatte 5 verschlossen ist. Auf der dem Schutzkasten 4 abgewandten Seite der Frontplatte 5 ist die Antriebseinheit 6 für die Siegeleinrichtungen 3, 3' angeordnet.

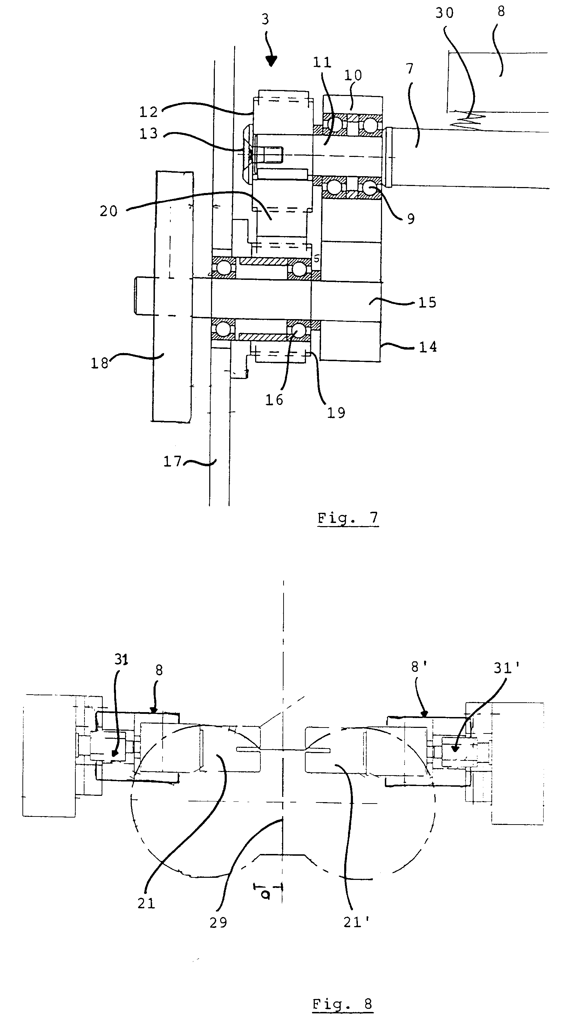

Wie den Fig. 1 und 7 zu entnehmen ist, weist jede Siegeleinrichtung 3 bzw. 3' einen Backenträger 7, 7' auf, an dem jeweils eine Quersiegelbacke 8, 8' radial verlagerbar angeordnet ist. Da die Siegeleinrichtungen 3, 3' baugleich und symmetrisch zueinander angeordnet sind, wird die Erfindung nachfolgend anhand der Siegeleinrichtung 3 erläutert.

Die Backenträger 7 sind an ihren Enden jeweils mittels Kugellagern 9 (s. Fig. 7) drehbar in Lenkern bzw. Kurbeln 10 gelagert, wobei die Backenträger 7 diesen Lenker 10 jeweils mittels einer Achse 11 durchgreifen. Auf das freie Ende dieser Achse 11 ist ein Zahnriemenrad 12 ortsfest aufgesetzt und mittels eines Elementes 13 festgelegt.

Während an einem Ende der Kurbel 10 der Backenhalter 7 drehbar gelagert ist, ist ihr anderes Ende 14 fest mit der Drehachse 15 der Siegeleinrichtung 3 verbunden. Die Drehachse 15 ist dabei drehbar mittels eines Kugellagers 16 in einer Lagerwandung 17 gelagert und mit ihrem anderen Ende drehfest mit einem Zahnriemenrad 18 verbunden. Auf die Drehachse 15 ist fluchtend zum Zahnriemenrad 12 ein weiteres Zahnriemenrad 19 zwischen Lagerwandung 17 und Kurbel 10 aufgesetzt, welches fest an der Lagerwandung 17 festgelegt ist. Dieses Festrad 19 ist dabei mit dem als Planetenrad dienenden Zahnriemenrad 12 über einen endlosen, geschlossenen Zahnriemen 20 drehverbunden.

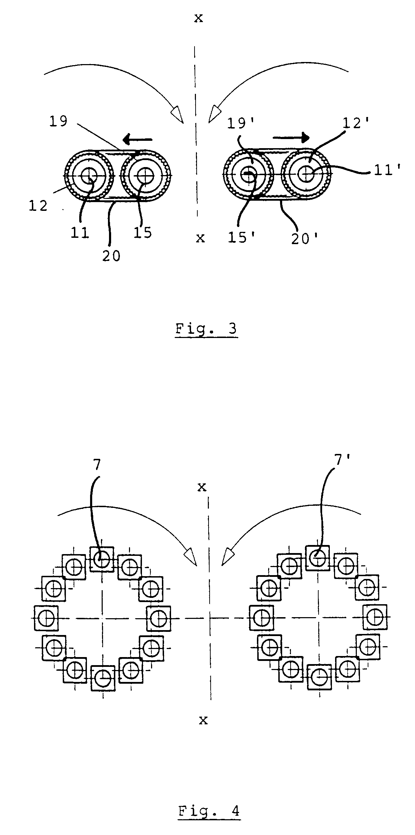

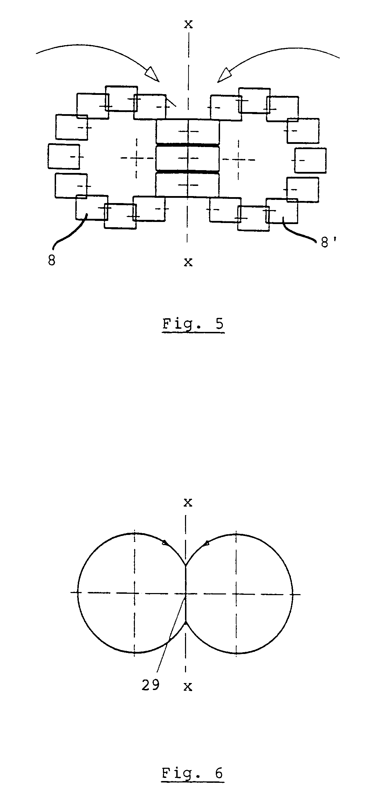

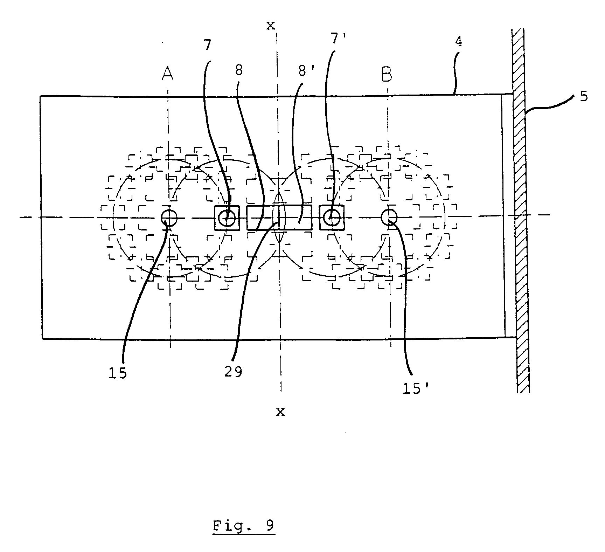

Werden nun die Backenträger 7 bzw. 7' mittels der Drehachsen 15, 15' im Uhrzeigersinn (s. Fig. 3 und 4) gedreht, so bleibt das Festrad 19, 19' jeweils ortsfest, während sich das Planetenrad 12, 12' zum einen gemeinsam mit dem Backenträger 7, 7' um die Drehachse 15, 15' auf der dargestellten Kreisbahn im Uhrzeigersinn und zusätzlich entgegen dem Uhrzeigersinn um das Festrad 19 bzw. 19' bewegt. Auf diese Weise wird die zugehörige Quersiegelbacke 8, 8' gemäß der in Fig. 5 dargestellten Bewegungsbahn jeweils während des gesamten Bahnumlaufes nur parallel zu sich selber verlagert, so daß ihre Schweißflächen stets dem Siegelbereich X-X und damit dem Folienschlauch zugewandt sind. Hierdurch legen sich die Quersiegelbacken 8, 8' mit ihren Fig. 8 entnehmbaren Siegelteilen 21, 21' stets vollflächig und vorteilhaft am zu versiegelnden Folienschlauch an. Die Quersiegelbacken 8, 8' liegen also von Anfang an auf der vertikalen Arbeitsstrecke mit ihrer gesamten Heizfläche am Folienschlauch an, so daß es keinerlei Verbrennungen dieses Schlauches gibt.

Wie Fig. 1 zu entnehmen ist, sind die Zahnriemenräder 18, 18' beidseits der Siegeleinrichtungen 3, 3' angeordnet. Zum Antrieb weist die Antriebseinheit 6 einen Motor 22, beispielsweise einen Servomotor auf, der beidseitig jeweils ein Zahnriemenrad 23, 23' synchron und mit gleicher Drehrichtung antreibt. Dieses Zahnriemenrad 23 ist, wie Fig. 2 zeigt, über einen einseitig verzahnten Endlosriemen 24 mit einem unteren Zahnriemenrad 25 drehverbunden. Dieses Zahnriemenrad 25 treibt wiederum über einen Doppelzahnriemen 26, 26' die jeweils mit den Drehachsen 15, 15' verbundenen Antriebs-Zahnriemenräder 18, 18' an. Der Doppelzahnriemen 26 ist in Fig. 2 ausschnittsweise vergrößert dargestellt, um seine Kontur aufzuzeigen. Das Zahnriemenrad 18 bzw. B ist beidseitig jeweils von einer Spann- bzw. Umlenkrolle 27, 28 umgeben. Aufgrund dieser vorgesehenen Spann- bzw. Umlenkrollen 27, 28 laufen das Zahnriemenrad 18, B und das Zahnriemenrad 18' bzw. A gegenläufig um, wie es für die gegenläufige Drehbewegung der Siegeleinrichtungen 3, 3' erforderlich ist. Durch diese Doppelzahnriemenübertragung weisen die Zahnriemenräder B und A bezüglich ihrer Bewegungsstrecke, ihrer momentanen Geschwindigkeit sowie ihrer momentanen Beschleunigung jeweils den gleichen Betrag auf. Entsprechend ist hierdurch eine zuverlässige synchrone und gegenläufige Bewegung gewährleistet.

In Fig. 6 ist die Bewegungsbahn der Quersiegelbacken 8, 8' dargestellt. Wie dieser Fig. 6 sowie Fig. 9 entnehmbar ist, durchlaufen die Quersiegelbacken 8, 8' zunächst eine Kreisbahn, die über die Länge der Siegelstrecke 29 in eine vertikale, geradlinie Arbeitsstrecke übergeht. Sind die Quersiegelbacken 8, 8', wie in Fig. 1 und 7 dargestellt, mittels Überzugfedern 30 am Backenträger 7, 7' federnd gelagert, so werden sie aufgrund der Anlage der Heizflächen ihrer Siegelteile aneinander abweichend von der sich überschneidenden Bewegungsbahn im Siegelbereich 29 in Richtung der Backenträger 7, 7' entgegen der Federwirkung zurückgedrängt.

Aus diesem Grunde ist gemäß der in Fig. 8 dargestellten Ausführungsform vorgesehen, daß sich die Bewegungsbahnen der Siegelbacken 8, 8' im Siegelbereich 29 nicht überlappen, sondern daß die Quersiegelbacken 8, 8' durch einen pneumatischen Zylinder 31, 31' um eine Strecke a (etwa 10 mm) in Richtung des Siegelbereiches 29 und in Richtung der gegenüberliegenden Quersiegelbacke vorgefahren bzw. vorgestoßen werden. Die pneumatischen Zylinder 31, 31' sind regelbar, so daß hierdurch eine konstante Siegelkraft während der gesamten Siegelstrecke 29 erreichbar ist. Da die Quersiegelbacken 8, 8' durch das plötzliche Vorstoßen durch die pneumatischen Zylinder 31, 31' den zu versiegelnden Folienschlauch plötzlich zusammendrücken, sind keine Vorspanner mehr zu diesem Zweck erforderlich. Der Backendruck ist über die gesamte Siegelstrecke 29 aufgrund der Regelbarkeit konstant. Dies erfolgt, indem der Druck im pneumatischen Zylinder 31, 31' verändert wird.

## Patentansprüche

1. Schlauchbeutelmaschine mit zumindest zwei Quersiegelbacken (8, 8'), welche an gegenüberliegenden Seiten eines zu versiegelnden Folienschlauches an jeweils einem Backenträger (7, 7'), der zyklisch zumindestens annähernd auf kreisförmigen Bahnen umläuft, angeordnet und gegeneinander anlegbar und voneinander trennbar sind, wobei die Backenträger (7, 7') jeweils drehbar an zumindest einem Lenker (10) gelagert und dieser fest mit einer drehbaren, in einer Lagerwandung gelagerten Achse (15, 15') verbunden ist, gekennzeichnet durch ein erstes, fest an der Lagerwandung (17) angeordnetes, von der drehbaren Achse (15, 15') durchgriffenes Zahnriemenrad (19, 19') und ein zweites, fest am Backenträger (7, 7') angeordnetes Zahnriemenrad (12, 12'), welche über einen endlosen, geschlossenen Zahnriemen (20) miteinander in Drehverbindung stehen.

2. Schlauchbeutelmaschine nach Anspruch 1, dadurch gekennzeichnet, daß die Zahnriemenräder (12, 12', 19, 19') fluchtend zueinander zwischen Lagerwandung (17) und Lenker (10) angeordnet sind, wobei der Lenker (10) vom Backenträger (7) durchgriffen ist.

3. Schlauchbeutelmaschine nach Anspruch 1 oder 2, dadurch gekennzeichnet, daß die Zahnriemenräder (12, 12', 19, 19') gleichen Durchmesser aufweisen.

4. Schlauchbeutelmaschine nach einem der Ansprüche 1 bis 3, dadurch gekennzeichnet, daß die Zahnriemenräder (12, 12', 19, 19') und der Zahnriemen (20) jeweils beidseitig des zugehörigen Backenträgers (7, 7') angeordnet sind.

5. Schlauchbeutelmaschine nach einem der Ansprüche 1 bis 4, dadurch gekennzeichnet, daß die drehbaren Achsen (15, 15') der an den gegenüberliegenden Seiten des zu versiegelnden Folienschlauches gegenläufig zueinander umlaufenden Backenträger (7, 7') über einen gemeinsamen endlosen Antriebsriemen (26, 26') angetrieben sind.

6. Schlauchbeutelmaschine nach Anspruch 5, dadurch gekennzeichnet, daß der Antriebsriemen (26, 26') ein endloser, geschlossener Doppelzahnriemen ist.

7. Schlauchbeutelmaschine nach Anspruch 6, dadurch gekennzeichnet, daß der gemeinsame Antriebsriemen (26, 26') jeweils an jedem Achsenende der symmetrisch zum Siegelbereich (27) angeordneten Achsen (15, 15') angeordnet ist.

8. Schlauchbeutelmaschine nach Anspruch 7, dadurch gekennzeichnet, daß die beiden Antriebsriemen (26, 26') synchron über einen gemeinsamen Antriebsmotor (22) angetrieben sind.

9. Schlauchbeutelmaschine nach einem der Ansprüche 5 bis 8, dadurch gekennzeichnet, daß die stirnverzahnte Innen- und Außenseite des Antriebsriemens (26, 26') über mit den Achsen (15, 15') drehverbundene Zahnriemenräder (18, B, 18', A) sowie Spann- und Umlenkrollen (27, 28) geführt ist.

10. Schlauchbeutelmaschine nach einem der Ansprüche 1 bis 9, dadurch gekennzeichnet, daß der radiale Abstand der Quersiegelbacken (8, 8') zu ihren Backenträgern (7, 7') in Richtung des Siegelbereiches (29) veränderbar ist.

11. Schlauchbeutelmaschine nach Anspruch 10, dadurch gekennzeichnet, daß die Quersiegelbacken (8, 8') mittels eines pneumatischen Zylinders (31, 31') radial vorfahrbar bzw. verlagerbar sind.

12. Schlauchbeutelmaschine nach Anspruch 11, dadurch gekennzeichnet, daß der Vorschub der Quersiegelbacken (8, 8') gegenüber dem Backenträger (7, 7') in etwa 10 mm beträgt.

13. Schlauchbeutelmaschine nach einem der Ansprüche 10 bis 12, dadurch gekennzeichnet, daß der Druck im pneumatischen Zylinder (31, 31') zur Erzeugung einer konstanten Andruckkraft während des Versiegelns geregelt veränderbar ist.

## Claims

1. Tubular bag machine with at least two transverse sealing jaws (8, 8'), which are positioned on opposite sides of a film tube to be sealed on in each case one jaw carrier (7, 7'), which revolves cyclically at least approximately on circular paths and which can be applied to and separated from one another, the jaw carriers (7, 7') being mounted in in each case rotary manner on at least one guide rod (10) and the latter is firmly connected to a rotary shaft (15, 15') mounted in a bearing wall, characterized by a first toothed belt wheel (19, 19'), traversed by the rotary shaft (15, 15') and arranged in fixed manner on the bearing wall (17) and a second toothed belt wheel (12, 12') arranged in fixed manner on the jaw carrier (7, 7') and which are in rotary connection with one another by means of a continuous, closed tooth belt (20).

2. Tubular bag machine according to claim 1, characterized in that the toothed belt wheels (12, 12', 19, 19') are arranged in mutually aligned manner between the bearing wall (17) and guide rod (10), the guide rod (10) being traversed by the jaw carrier (7).

3. Tubular bag machine according to claim 1 or 2, characterized in that the toothed belt wheels (12, 12', 19, 19') have the same diameter.

4. Tubular bag machine according to one of the claims 1 to 3, characterized in that the toothed belt wheels (12, 12', 19, 19') and the toothed belt (20) are in each case arranged on either side of the associated jaw carrier (7, 7').

5. Tubular bag machine according to one of the claims 1 to 4, characterized in that the rotary shafts of the contrarotating jaw carriers (7, 7') on opposite sides of the film tube to be sealed are driven by means of a common, continuous driving belt (26, 26').

6. Tubular bag machine according to claim 5, characterized in that the driving belt (26, 26') is a continuous, closed double toothed belt.

7. Tubular bag machine according to claim 6, characterized in that the common driving belt (26, 26') is in each case located on each shaft end of the shafts (15, 15') arranged symmetrically to the sealing area (27).

8. Tubular bag machine according to claim 7, characterized in that the two driving belts (26, 26') are driven synchronously by means of a common drive motor (22).

9. Tubular bag machine according to one of the claims 5 to 8, characterized in that the radially serrated inside and outside of the driving belt (26, 26') is guided by means of toothed belt wheels (18, B, 18', A) connected in rotary manner to the shafts (15, 15') and idler and guide pulleys (27, 28).

10. Tubular bag machine according to one of the claims 1 to 9, characterized in that the radial spacing of the transverse sealing jaws (8, 8') with respect to their jaw carriers (7, 7') in the direction of the sealing area (29) is variable.

11. Tubular bag machine according to claim 10, characterized in that the transverse sealing jaws (8, 8') are radially advanceable or displaceable by means of a pneumatic cylinder (31, 31').

12. Tubular bag machine according to claim 11, characterized in that the feed of the transverse sealing jaws with respect to the jaw carriers (7, 7') is approximately 10 mm.

13. Tubular bag machine according to one of the claims 10 to 12, characterized in that the pressure in the pneumatic cylinder (31, 31') for producing a constant pressure force during sealing can be varied in a regulated manner.

## Revendications

1. Machine de fabrication de sacs tubulaires comprenant au moins deux mâchoires transversales de scellement (8,8') situées sur les côtés opposés d'un boudin de film à sceller chacun sur un support latéral respectivement (7,7') des mâchoires de scellement en mouvement de rotation cyclique sur des pistes au moins approximativement circulaires, mâchoires de scellement pouvant être amenées en contact et séparées l'une de l'autre, les supports (7,7') des mâchoires de scellement étant chacun montés rotatifs sur au moins un levier oscillant (10), celui-ci étant relié fixe à un axe (15,15') rotatif monté à rotation dans une paroi de palier, caractérisée par une première poulie à courroie crantée (19,19') montée fixe sur la paroi de palier (17) et traversée par l'axe rotatif (15,15'), et par une deuxième poulie à courroie crantée (12,12') montée fixe sur le support latéral (7,7') de mâchoire de scellement, les deux poulies étant reliées à rotation l'une avec l'autre par une courroie crantée (20) fermée continue.

2. Machine selon la revendication 1, caractérisée en ce que les poulies à courroie crantée (12,12',19,19') sont disposées alignées l'une par rapport à l'autre entre la paroi de palier (17) et le levier oscillant (10), le levier oscillant (10) étant traversé par le support latéral (7) de mâchoire de scellement.

3. Machine selon la revendication 1 ou 2, caractérisée en ce que les poulies à courroie crantée (12,12',19,19') présentent une section identique.

4. Machine selon l'une quelconque des revendications 1 à 3, caractérisée en ce que les poulies à courroie crantée (12,12',19,19') et la courroie crantée (20) sont montées à chaque fois de part et d'autre du support (7,7') de mâchoire de scellement correspondant.

5. Machine selon l'une quelconque des revendications 1 à 4, caractérisée en ce que les axes rotatifs (15,15') des supports (7,7') de mâchoire de scellement tournant en sens inverse l'un par rapport à l'autre sur les côtés opposés du boudin de film à sceller sont entraînés par une courroie de transmission (26,26') continue commune.

6. Machine selon la revendication 5, caractérisée en ce que la courroie de transmission (26,26') est une courroie crantée double, fermée et continue.

7. Machine selon la revendication 6, caractérisée en ce que la courroie de transmission (26,26') commune est montée à chaque fois à chaque extrémité des axes (15,15') montés symétriques par rapport à la zone de scellement (29).

8. Machine selon la revendication 7, caractérisée en ce que les deux courroies de transmission (26,26') sont entraînées de façon synchrone par un moteur de commande (22) commun.

9. Machine selon l'une quelconque des revendications 5 à 8, caractérisée en ce que la face intérieure et extérieure crantée frontalement de la courroie de transmission (26,26') est guidée par des poulies à courroie crantée (18,B,18',A) reliées à rotation aux axes (15,15') ainsi que par des poulies (27,28) de tension et de guidage.

10. Machine selon l'une quelconque des revendications 1 à 9, caractérisée en ce que la distance radiale des mâchoires transversales de scellement (8,8') par rapport à leurs supports (7,7') est variable dans la direction de la zone de scellement (29).

11. Machine selon la revendication 10, caractérisée en ce que les dispositifs de scellement (8,8') transversaux peuvent être avancés radialement ou déplacés par un vérin pneumatique (31,31').

12. Machine selon la revendication 11, caractérisée en ce que le déplacement vers l'avant des mâchoires transversales de scellement (8,8') par rapport aux supports latéraux (7,7') est d'environ 10 mm.

13. Machine selon l'une quelconque des revendications 10 à 12, caractérisée en ce que l'on peut commander une variation de la pression dans le vérin pneumatique (31,31') durant l'opération de scellement pour obtenir une force de pression constante.
